# EUROPÄISCHE PATENTSCHRIFT

(11) **EP 2 658 703 B1**
(45) Veröffentlichungstag und Bekanntmachung des Hinweises auf die Patenterteilung: **18.10.2017**
(21) Anmeldenummer: 11709009.2
(22) Anmeldetag: 08.03.2011
(51) Int. Cl.: B29C 69/00, B29C 65/10, B29C 45/00, B29C 65/20, B29C 65/36, B29C 65/78, B29L 22/00

(54) **VERFAHREN UND VORRICHTUNG ZUR HERSTELLUNG EINES BAUTEILS MITTELS SPRITZGIESSENS UND SCHWEISSENS**
METHOD AND DEVICE FOR PRODUCING A COMPONENT BY MEANS OF INJECTION MOULDING AND WELDING
PROCEDE ET DISPOSITIF POUR LA REALISATION D'UNE PIECE PAR MOULAGE PAR INJECTION ET SOUDAGE.

(30) Priorität: 27.12.2010 DE 102010056326
(43) Veröffentlichungstag der Anmeldung: 06.11.2013
(73) Patentinhaber: ElringKlinger AG, 72581 Dettingen (DE)
(72) Erfinder: HUMMEL, Volker, 73087 Bad Boll (DE)
(74) Vertreter: Hoeger, Stellrecht & Partner Patentanwälte mbB
(86) Internationale Anmeldenummer: PCT/EP2011/001120
(87) Internationale Veröffentlichungsnummer: WO 2012/089287

(56) Entgegenhaltungen:
- EP-A1- 1 415 789
- EP-A1- 1 591 227
- DE-A1- 10 019 163
- DE-A1-102006 010 815
- JP-A- 7 016 945
- JP-A- S5 290 584
- JP-A- 10 166 449
- JP-A- 2001 026 056
- JP-A- 2007 296 700
- US-A- 4 450 038

## Beschreibung

Die Erfindung betrifft ein Verfahren und eine Vorrichtung zur Herstellung eines aus wenigstens zwei Kunststoffteilen bestehenden Bauteils.

Bauteile aus Kunststoff werden verstärkt in unterschiedlichen industriellen Bereichen eingesetzt. Insbesondere im Kraftfahrzeugbereich werden zur Herstellung von Kraftfahrzeugen verstärkt Bauteile aus Kunststoff eingesetzt.

Eine wesentliche Anforderung bei der Herstellung von derartigen Bauteilen sind die Genauigkeiten, mit welchen diese hergestellt werden, das heißt die zulässigen Toleranzen für derartige Bauteile werden sehr gering vorgegeben. Eine zusätzliche, wesentliche Anforderung besteht in vielen industriellen Applikationen in den Reinheitsanforderungen für die Bauteile, das heißt bei deren Herstellung müssen Verunreinigungen dieser Bauteile weitestgehend vermieden werden.

Daraus resultieren entsprechend große Anforderungen an die Herstellungsprozesse der Bauteile. Kunststoffteile, die zur Herstellung der Bauteile verwendet werden, werden üblicherweise im Spritzgußverfahren hergestellt. Die Herstellung von derartigen Kunststoffteilen kann zwar mit hoher Genauigkeit erfolgen. Problematisch sind jedoch das Handling und die weiteren Prozesse zum Verbinden derartiger Kunststoffteile.

Ein bekannter Prozess zum Verbinden zweier Kunststoffteile zur Herstellung eines Bauteils ist das Reibschweißen. Problematisch hierbei ist zum einen das Ausrichten, Greifen, Positionieren und Fixieren der Kunststoffteile, das mit eigens hierfür konzipierten Vorrichtungen durchgeführt werden muss. Abgesehen davon, dass damit ein erheblicher konstruktiver Aufwand verbunden ist, ist hierbei nachteilig, dass bereits bei dem erforderlichen Handling der Kunststoffteile Verzüge auftreten können, die eine Ursache dafür sind, dass die vorgegebenen Toleranzen der herzustellenden Bauteile nicht eingehalten werden können. Weiter ist nachteilig, dass das Reibschweißen ein kontaktbehafteter Arbeitsvorgang ist, der zu weiteren Verzügen der Kunststoffteile und damit des Bauteils führen kann. Zudem können dadurch Verunreinigungen in dem herzustellenden Bauteil entstehen, so dass auch die Reinheitsanforderungen für das Bauteil nicht mehr erfüllt werden.

Aus der EP 1 591 227 A1 ergeben sich ein Verfahren nach dem Oberbegriff des Anspruchs 1 sowie eine Vorrichtung nach dem Oberbegriff des Anspruchs 8. Bei der bekannten Vorrichtung weist das Spritzguss-Werkzeug eine erste, stationäre Werkzeughälfte sowie eine zweite, sowohl quer als auch senkrecht zu Letzterer verschiebbare Werkzeughälfte auf, und in der ersten Werkzeughälfte sind zwei Werkzeugteile vorgesehen, welche in zur Werkzeugrichtung, das heißt zur Schließrichtung des Spritzguss-Werkzeugs geneigten Richtungen verschiebbar sind. Mit der bekannten Vorrichtung werden drei Kunststoffteile im Spritzgussverfahren hergestellt, von denen nach dem Öffnen des Spritzguss-Werkzeugs das eine an der verschiebbaren ersten Werkzeughälfte gelagert ist, während von den beiden anderen Kunststoffteilen jeweils eines an einem der beiden schräg verschiebbaren Werkzeugteile gelagert ist. Miteinander zu verschweißende Randbereiche der Kunststoffteile werden mittels eines elektrisch erhitzbaren Heizelements erwärmt und angeschmolzen, wobei das bei geöffnetem Spritzguss-Werkzeug zwischen die Kunststoffteile einbringbare Heizelement den miteinander zu verschweißenden Kunststoffteil-Randbereichen ähnliche Heizflächen aufweisen kann.

Aus der JP 07-016945 A ergibt sich die Verwendung des Heißgas-Schweißens für ein Verfahren, bei welchem miteinander zu verbindende Kunststoffteile in einem öffenbaren Spritzguss-Werkzeug hergestellt und dann miteinander verbunden werden, während die Kunststoffteile an den Werkzeugteilen des Spritzguss-Werkzeugs gelagert sind. Nach dem Spritzgießen zweier Kunststoffteile wird das Spritzguss-Werkzeug geöffnet und werden dessen Werkzeugteile samt den an diesen gelagerten Kunststoffteilen relativ zueinander so positioniert, dass die Kunststoffteile mit miteinander zu verschweißenden Randbereichen gegeneinander anliegen und dabei Kanäle bilden, durch welche Heißluft geleitet wird, um diese Randbereiche zu erhitzen und anzuschelzen. Sodann werden die beiden Kunststoffteile mit ihren erhitzten Randbereichen gegeneinandergepresst und so miteinander verschweißt.
Für das Verbinden von durch beliebige Verfahren hergestellten Kunststoffteilen sind auch schon Schweißspiegel-ähnliche Heißgas-Heizelemente bekannt, welche auf ihren beiden Seiten Reihen von Heißgas-Austrittsöffnungen aufweisen, wobei der Verlauf dieser Reihen von Heißgas-Austrittsöffnungen an den Verlauf der miteinander zu verschweißenden Kunststoffteil-Randbereiche angepasst ist. Derartige Heißgas-Heizelemente und deren vorstehend beschriebene Verwendung ergeben sich aus den folgenden Dokumenten: DE 100 19 163 A1, EP 1 415 789 B1,
DE 10 2006 010 815 A1, JP 52-90584 A und US 4,450,038. Dabei wird in der DE 100 19 163 A1 darauf hingewiesen, dass die Geometrien der Heißgas-Ausströmöffnungen an der Ober- bzw. Unterseite des Heizelements selbstverständlich unterschiedlich gestaltet werden können, um das Strömungsprofil des Warmgasstrahles entsprechend zu beeinflussen. In der EP 1 415 789 B1 wird darauf hingewiesen, dass bei der Gestaltung des Verlaufs der (mit den Heißgas-Austrittsöffnungen) zu erzeugenden Schweißlinien verschiedene Formen möglich sind und der Verlauf der Düsenbohrungsreihen dreidimensional sein kann. Im einfachsten Fall werden durch den Schweiß-Prozess zwei Kunststoff-Teile miteinander verbunden. Generell können auch mehrere Kunststoff-Teile durch Schweißen miteinander verbunden werden.
Mit diesem Heißgas-Schweißverfahren können mit geringem konstruktivem Aufwand aus Kunststoffteilen bestehende Bauteile hergestellt werden, wobei die Herstellung reproduzierbar mit sehr hoher Genauigkeit erfolgen kann,
das heißt mit diesem Verfahren können Bauteile mit sehr geringen Toleranzen bereitgestellt werden.

Der Erfindung liegt die Aufgabe zugrunde, ein alternatives Verfahren zur eingangs genannten Art bereitzustellen, auf dessen eine Herstellung von Bauteilen aus Kunststoff ermöglicht wird.

Zur Lösung dieser Aufgabe sind die Merkmale der Ansprüche 1 und 8 vorgesehen. Vorteilhafte Ausführungsformen und zweckmäßige Weiterbildungen der Erfindung sind in der Unteransprüchen beschrieben.

Mit dem erfindungsgemäßen Verfahren werden Bauteile hergestellt, die auch sehr hohen Reinheitsanforderungen genügen, da die zur Herstellung der Bauteile benötigten Verfahrensschritte, nämlich das Spritzgußverfahren zur Herstellung der Kunststoffteile und das Heißgas-Schweißen zur Herstellung der Verbindung der Kunststoffteile zur Bildung des Bauteils Prozesse bilden, die dahingehend sehr gut kontrollierbar sind, dass Verunreinigungen in den Kunststoffteilen beziehungsweise in dem daraus gefertigten Bauteil weitestgehend vermieden werden.

Ein wesentlicher Aspekt des erfindungsgemäßen Verfahrens besteht darin, dass die beiden Kunststoffteile in der Spritzgußform, in welcher diese durch das Spritzgußverfahren hergestellt werden, durch einen Heißgasschweiß-Prozess verbunden werden. Damit werden keine separaten Vorrichtungen zum Handling der Kunststoffteile, insbesondere zu deren Positionierung, Ausrichtung und anschließenden Lagefixierung benötigt, um dann nachfolgend die Kunststoffteile durch Heißgas-Schweißen verbinden zu können, was die Arbeitszeiten und Herstellkosten der Bauteile erheblich senkt.
Ein noch bedeutenderer Vorteil dieser Maßnahme besteht jedoch darin, dass dadurch die Genauigkeit und Qualität der Herstellung der Bauteile erheblich erhöht wird.
Dies beruht darauf, dass die Spritzgußform, in welcher die Kunststoffteile hergestellt werden, naturgemäß die passgenauere Aufnahme für die Kunststoffteile bildet, um damit das nachfolgende Heißgas-Schweißen durchzuführen. Da die Kunststoffteile während des gesamten Vorgangs zur Herstellung des Bauteils durch den Schweißvorgang in der originären Spritzgußform verbleiben, können Verzüge oder sonstige Formänderungen der Kunststoffteile vermieden werden, so dass Bauteile mit sehr geringen Toleranzen hergestellt werden können.
Die zur Durchführung des Verfahrens eingesetzte Spritzgußform weist ein Werkzeug mit wenigstens zwei gegeneinander positionierbaren Werkzeugteilen auf. Zur Herstellung der Kunststoffteile mittels des Spritzgußverfahrens wird das Werkzeug durch Zusammenfahren der Werkzeugteile geschlossen.

Der Kunststoff wird in zwei von den Werkzeugteilen begrenzte, beabstandet liegende Hohlräume eingespritzt.

Die simultane Herstellung beider Kunststoffteile in einer Spritzgußform ist eine wesentliche Voraussetzung dafür, dass nachfolgend in dieser Spritzgußform das Verbinden der Kunststoffteile durch das Heißgas-Schweißen erfolgen kann.

Hierzu wird nach Herstellung der Kunststoffteile mittels des Spritzgußverfahrens das Werkzeug geöffnet, und darauf die Werkzeugteile, an welchen jeweils eines der Kunststoffteile gelagert ist, so positioniert, dass die Kunststoffteile in einer Schweißposition angeordnet sind.

In dieser Schweißposition sind die Kunststoffteile im Abstand gegenüberliegend angeordnet. Wesentlich hierbei ist, dass die Kunststoff-Teile in der Spritzgußform gelagert, ohne Verzüge und ohne Formänderungen in exakt definierten Positionen relativ zueinander angeordnet sind. Diese Genauigkeit wäre bei einer Entnahme der Kunststoff-Teile aus der Spritzgußform irreversibel zerstört.

Dann wird in der Schweißposition ein Heißgas-Heizelement in den Zwischenraum zwischen die Kunststoffteile eingebracht, wobei mit dem Heizelement zu verschweißende Randbereiche der Kunststoffteile erwärmt werden.

Vorteilhaft ist, dass im Fall des Heißgas- Schweißens das Heizelement von einem Heizspiegel gebildet ist, mittels dessen die Randbereiche der Kunststoffteile berührungslos erwärmt werden.

Durch die berührungslose Erwärmung der Randbereiche der Kunststoffteile werden unerwünschte Verzüge oder Verformungen der Kunststoffteile vermieden. Zudem ist gewährleistet, dass keine unerwünschten Verunreinigungen der Kunststoffteile auftreten.

Nach der Erwärmung der Randbereiche der Kunststoffteile mittels des Heizelements wird dieses aus dem Zwischenraum entfernt und durch Schließen des Werkzeugs werden die Kunststoffteile gegeneinander geführt, so dass diese an den erwärmten Randbereichen miteinander zu dem Bauteil verschweißt werden.
Da die Werkzeugteile der Spritzgußform exakt an die Geometrien der Kunststoffteile angepasste Aufnahmen bilden, ist gewährleistet, dass die Kunststoffteile bei dem Schweißvorgang ihre Formen exakt beibehalten.
Nach dem Verschweißen wird das Werkzeug geöffnet und das Bauteil mittels Auswurfeinheiten aus der Spritzgußform entfernt.
Damit steht die Spritzgußform zur Herstellung neuer Kunststoffteile zur Verfügung, die dann nach dem erläuterten Verfahren wieder verschweißt werden können.

Das erfindungsgemäße Verfahren dient zur Herstellung eines aus wenigstens zwei Kunststoffteilen bestehenden Bauteils. Die Kunststoffteile werden mittels eines Spritzgußverfahrens in einer Spritzgußform hergestellt, welche ein Werkzeug mit wenigstens zwei gegeneinander positionierbaren Werkzeugteilen aufweist. Zur Herstellung der Kunststoffteile wird mittels des Spritzgußverfahrens das Werkzeug durch Zusammenfahren der Werkzeugteile in einer Werkzeugrichtung geschlossen und Kunststoff wird in wenigstens zwei von den Werkzeugteilen begrenzte, beabstandet liegende Hohlräume eingespritzt. Die Kunststoffteile werden in der Spritzgußform anschließend durch Schweißen miteinander verbunden. Hierzu werden die Werkzeugteile aus einer Schweißposition in einer zur Werkzeugrichtung geneigten Schweißrichtung gegeneinander gefahren, so dass zu verschweißende Randbereiche der Kunststoffteile in Kontakt gebracht werden.
Die Erfindung betrifft zudem eine entsprechende Vorrichtung. Erfindungsgemäß werden die beiden Werkzeugteile des Werkzeugs zur Durchführung des Schweißvorgangs in einer Schweißrichtung geführt, die unterschiedlich zur Werkzeugrichtung der Werkzeugteile zur Herstellung der Kunststoffteile ist.
Während die Werkzeugrichtung vorzugsweise in vertikaler Richtung orientiert ist, ist die Schweißrichtung in einem vorgegebenen Neigungswinkel dazu orientiert. Durch eine an die Geometrien der Kunststoffteile angepasste Dimensionierung des Neigungswinkels kann die Qualität des Schweißvorgangs gezielt verbessert werden. Diese Verbesserung beruht darauf, dass der Neigungswinkel so vorgegeben wird, dass bei der Führung der Werkzeugteile entlang der Schweißrichtung erst unmittelbar vor Aufeinanderfahren der Werkzeugteile die Kunststoffteile miteinander in Kontakt kommen, und zwar nur mit den zu verschweißenden Bereichen der Kunststoffteile, die zuvor mit dem Heizelement erwärmt wurden. Vorzugsweise entsteht der Kontakt der Kunststoffteile erst während der letzten 1 oder 2 mm der Verfahrbewegung der Werkzeugteile, also unmittelbar bevor diese aufeinander auftreffen. Der Kontakt der Kunststoffteile wird somit exakt auf die zu verschweißenden Stellen der Kunststoffteile begrenzt, so dass eine reproduzierbare, hochqualitative Schweißnaht erhalten wird.
Würden die Werkzeugteile in einer Schweißrichtung geführt, die mit der Werkzeugrichtung zusammenfällt, könnte ein derartig präziser Schweißvorgang nicht erhalten werden. Die Führung der Werkzeugteile in der Werkzeugrichtung erfolgt aus einer Anfangsposition heraus, in der die Werkzeugteile gegenüberliegend angeordnet sind. Die Werkzeugrichtung verläuft dann in vertikaler Richtung.

Würden bei dem darauffolgenden Schweißvorgang die Werkzeugteile in einer mit der Werkzeugrichtung zusammenfallenden Schweißrichtung bewegt werden, würden bei Annähern der Werkzeugteile die Kunststoffteile frühzeitig miteinander in Kontakt kommen. Insbesondere würden auch die zu verschweißenden Bereiche, die zuvor mit einem Heizelement erwärmt wurden, mit nicht zu verschweißenden Bereichen der Kunststoffteile in Kontakt kommen, so dass der Schweißvorgang nicht auf die zu verschweißenden Bereiche konzentriert würde, sondern sich über größere Bereiche der Kunststoffteile erstrecken würde, wodurch die Qualität der Schweißnähte beeinträchtigt würde. Dieser Nachteil wird mit dem erfindungsgemäßen Verfahren vermieden.

Gemäß einer vorteilhaften Ausgestaltung der Erfindung werden die Werkzeugteile mittels einer Zwangsführung entlang der Schweißrichtung geführt.

Besonders vorteilhaft weist die Zwangsführung als erstes Element eine Führungsbohrung in einem ersten Werkzeugteil auf, in welcher als zweites Element der Zwangsführung eine Führungsstange am zweiten Werkzeugteil geführt wird.

Alternativ können die Werkzeugteile elektronisch gesteuert gegeneinander verfahren werden. Die Zwangsführung entfällt dann.

Durch diese Zwangsführung wird mit geringem konstruktivem Aufwand eine exakte Führung der Werkzeugteile entlang der Schweißrichtung während des Schweißvorgangs erhalten.

Die Erfindung wird im Folgenden anhand der Zeichnungen erläutert. Es zeigen:
- Figur 1:: Darstellung einer Spritzgußform bei geschlossenem Werkzeug zur Herstellung zweier Kunststoffteile durch ein Spritzgußverfahren.
- Figur 2:: Darstellung der Spritzform bei geöffnetem Werkzeug nach erfolgter Herstellung der Kunststoffteile, wobei jeweils an einem Werkzeugteil des Werkzeugs ein Kunststoffteil gelagert ist.
- Figur 3:: Anordnung gemäß Figur 3 mit bei in eine Schweißposition verfahrenen Werkzeugteilen und einem Heizelement zwischen den Kunststoffteilen.
- Figur 4:: Darstellung der Anordnung gemäß Figur 3 nach Ausrichtung einer Führungsbohrung des ersten Werkzeugteils auf eine Führungsstange des zweiten Werkzeugteils.
- Figuren 5 u. 6:: Führung der Werkzeugteile entlang einer durch die Führungsbohrung und die Führungsstange vorgegebenen Schweißrichtung zum Verschweißen der Kunststoffteile zu einem Bauteil.
- Figur 7:: Darstellung der Spritzgußform bei geöffnetem Werkzeug nach erfolgtem Verschweißen der Kunststoffteile.
- Figur 8:: Darstellung der Spritzgußform mit dem Werkzeug in einer Entnahmeposition für die Entnahme des Bauteils.
- Figur 9:: Anordnung gemäß Figur 8 bei Entformen des Bauteils.
- Figur 10:: Darstellung der Spritzgußform vor Durchführung eines erneuten Spritzgußvorgangs.

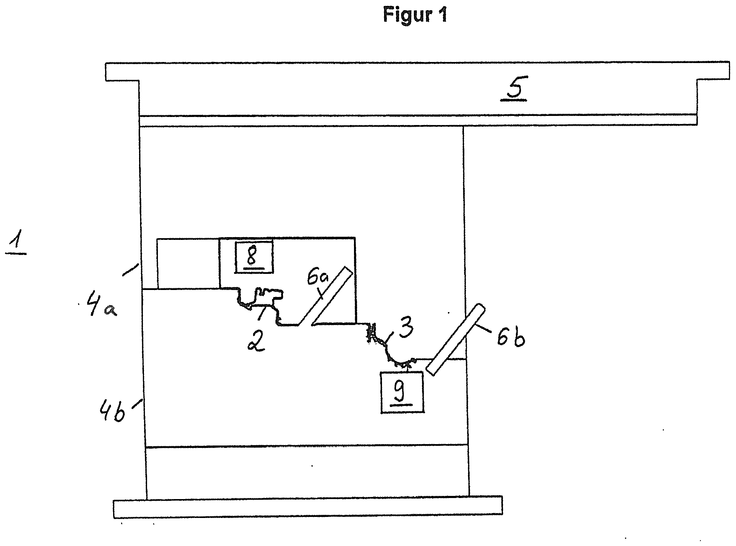

Die Figuren 1 bis 10 zeigen eine Ausführungsform der erfindungsgemäßen Vorrichtung mit einer Spritzgußform 1 zur Herstellung zweier Kunststoffteile 2, 3. Die Spritzgußform 1 umfasst ein Werkzeug mit zwei gegeneinander bewegbaren Werkzeugteilen 4a, 4b. Die Werkzeugteile 4a, 4b können durch einen nicht gesondert dargestellten Hebemechanismus in vertikaler Richtung aufeinander zubewegt beziehungsweise voneinander abgehoben werden. Zudem ist eine Führungsschiene 5 vorgesehen, mittels derer das obere Werkzeugteil 4a in horizontaler Richtung quer zum unterem Werkzeugteil 4b bewegt werden kann. Am oberen Werkzeugteil 4a ist eine Führungsbohrung 6a angeordnet, am unteren Werkzeugteil 4b ist eine Führungsstange 6b angeordnet. Die Führungsbohrung 6a und die Führungsstange 6b bilden eine Zwangsführung. Die Längsachsen der Führungsbohrung 6a und der Führungstange 6b sind um denselben Neigungswinkel zur Vertikalen geneigt, wobei dieser im vorliegendem Fall etwa 45° beträgt. Der Hebemechanismus und die Führungsschiene 5 bilden Positioniermittel.

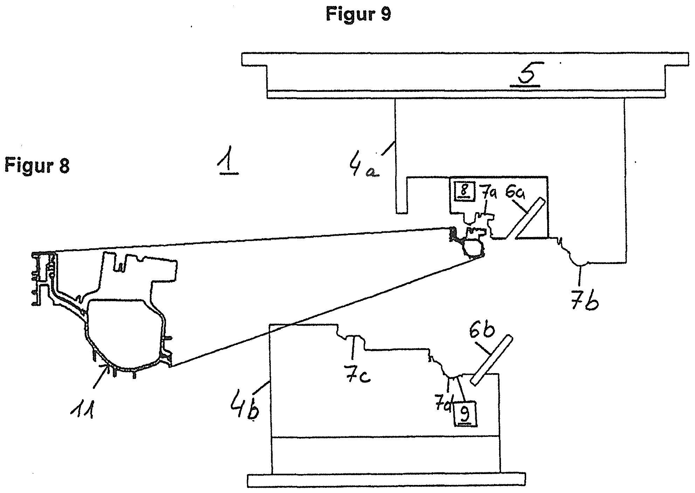

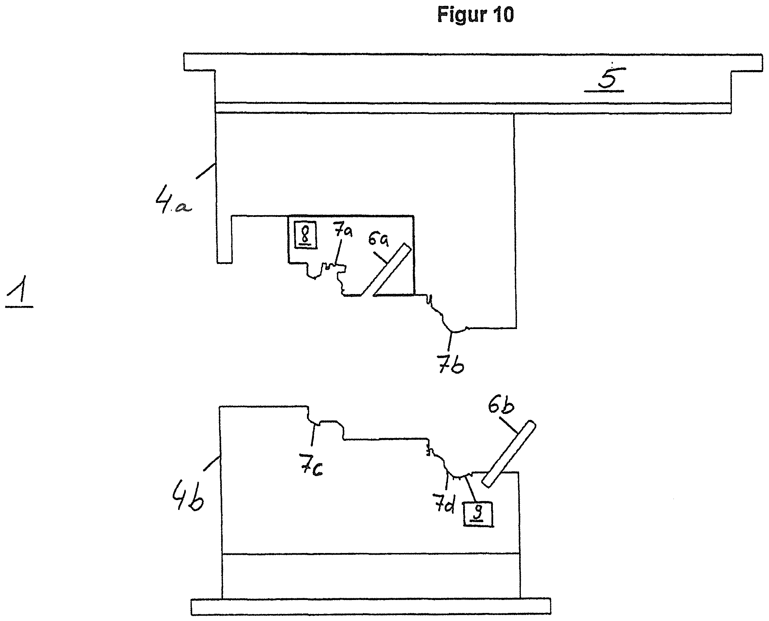

Wie insbesondere aus den Figuren 9 und 10 ersichtlich, welche die Werkzeugteile 4a, 4b ohne Kunststoffteile 2, 3 im geöffneten Zustand zeigen, weist jedes Werkzeugteil 4a, 4b Kavitäten 7a-7d auf, die sich bei Schließen des Werkzeugs zu geschlossenen Hohlräumen ergänzen, in welche in einem Spritzgußvorgang Kunststoff eingespritzt wird, um damit die Kunststoffteile 2, 3 herzustellen. Den Kavitäten 7a, 7d ist jeweils eine Auswurfeinheit 8, 9 mit motorisch betriebenen Auswurfstiften 8a, 9a zugeordnet. Mit den Auswurfeinheiten können fertiggestellte Kunststoffteile 2, 3 bei geöffnetem Werkzeug ausgeworfen werden.

Die Figuren 1 bis 10 zeigen die einzelnen Verfahrensschritte des erfindungsgemäßen Verfahrens.

Figur 1 zeigt die Spritzgußform 1 mit geschlossenem Werkzeug. Die Werkzeugteile 4a, 4b werden in einer vertikalen Richtung verlaufenden Werkzeugrichtung aufeinander zubewegt, bis sie sich in der Schließposition befinden. In der Schließposition der Werkzeugteile 4a, 4b bilden die Kavitäten 7a-7d zwei Hohlräume aus, in welche Kunststoff in einem Spritzguß-Vorgang eingespritzt wird um damit die beiden Kunststoffteilen 2, 3 herzustellen. Nach dem Einspritzen des Kunststoffs erfolgt in bekannter Weise ein Nachdrücken derart, dass die Werkzeugteile noch weiter gegeneinander gefahren werden, um einen vorgegebenen Druck auf die gerade erstellten Kunststoffteile 2, 3 auszuüben. Danach erfolgt ein Abkühlen der erstellten Kunststoffteile 2, 3 so dass diese in der Spritzgußform 1 ausgehärtet werden.

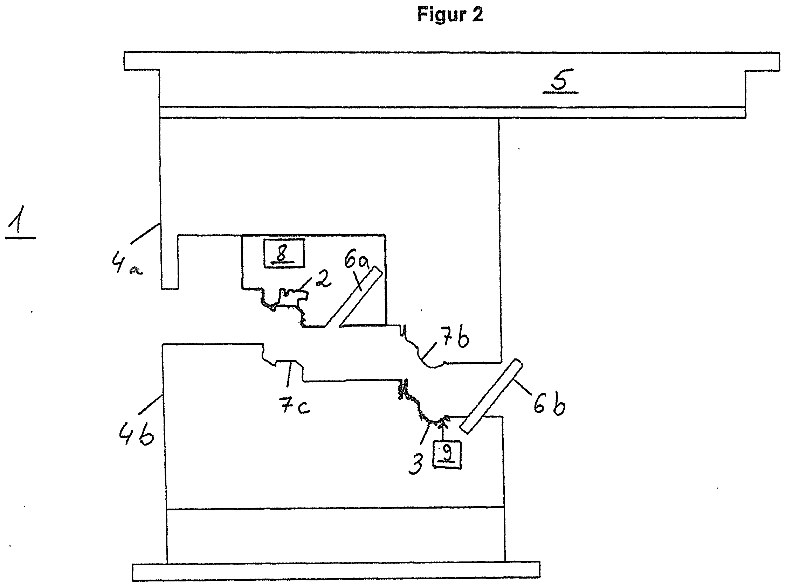

Nach dem so abgeschlossenen Spritzgußverfahren zur Herstellung der Kunststoffteile 2, 3 wird das Werkzeug durch Auseinanderfahren der Werkzeugteile 4a, 4b in vertikaler Richtung, das heißt in der Werkzeugrichtung wie in Figur 2 dargestellt, geöffnet. In dieser geöffneten Werkzeugposition ist das erste Kunststoffteil 2 am oberen Werkzeugteil 4a angeordnet und dort fixiert, während das zweite Kunststoffteil 3 am unteren Werkzeugteil 4b angeordnet und fixiert ist.

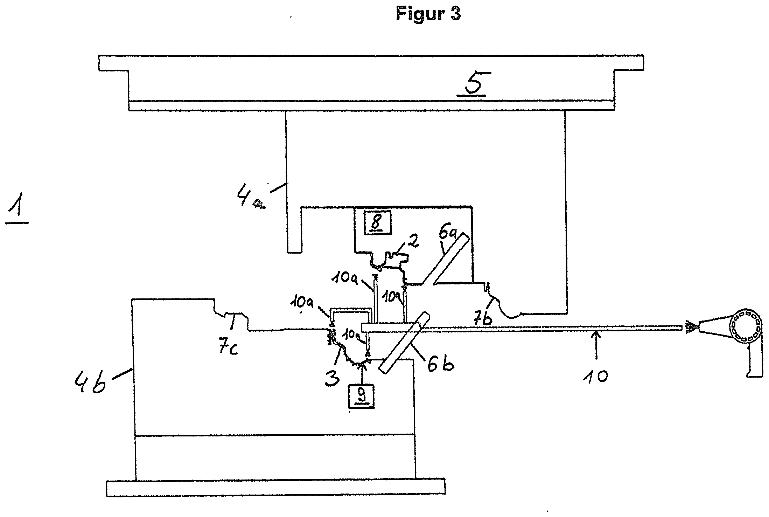

Anschließend erfolgt, wie in Figur 3 dargestellt, ein Einfahren der Kunststoffteile 2, 3 in eine Schweißposition. In dieser Schweißposition wird ein HeißgasSchweiß-Prozess durchgeführt. Zur Durchführung des Heißgas-Schweißen-Prozesses wird, wie in Figur 3 dargestellt, in dem Zwischenraum zwischen den in der Schweißposition positionierten Kunststoffteilen 2, 3 ein Heizelement 10 eingebracht. Mit diesem Heizelement 10 erfolgt simultan eine berührungslose Erwärmung von Randbereichen beider Kunststoffteile 2, 3 wobei an diesen Randbereichen die Kunststoffteile 2, 3 später miteinander verschweißt werden sollen.

Das Heizelement 10 ist im vorliegenden Fall von einem Heizspiegel mit einem plattenförmigen Grundkörper gebildet, an dessen Ober- und Unterseite Auslässe 10a in definierten Sollpositionen ausmünden, die an die Konturen der Randbereiche der Kunststoffteile 2, 3 angepasst sind. Durch diese Auslässe 10a wird Heißgas, insbesondere Heißluft, geblasen, so dass die Randbereiche der Kunststoffteile 2, 3 mit Heißgas beaufschlagt und dadurch erwärmt beziehungsweise angeschmolzen werden.

Nachdem mit dem Heizelement 10 die Randbereiche der Kunststoffteile 2, 3 erwärmt werden, wird das Heizelement 10 aus dem Zwischenraum zwischen den Kunststoffteilen 2, 3 entfernt.

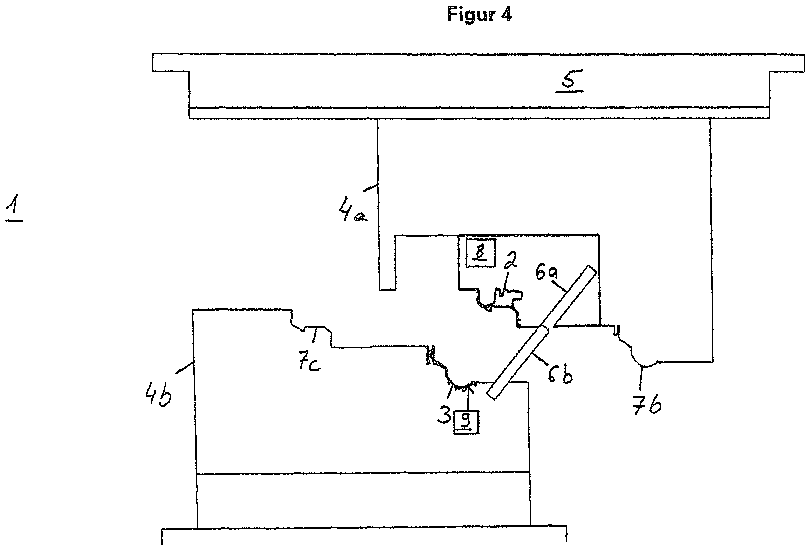

Danach werden die Werkzeugteile 4a, 4b weiter verfahren, bis sie in der in Figur 4 dargestellten Position angeordnet sind. In dieser Position ist die Führungsbohrung 6a des oberen Werkzeugteils 4a auf die Führungsstange 6b des unteren Werkzeugteils 4b ausgerichtet.

Um die Kunststoffteile 2, 3 an den Schweißstellen, die von den mittels des Heizelements erwärmten Bereichen gebildet sind, miteinander zu verschweißen, werden die Werkzeugteile 4a, 4b in einer Schweißrichtung aufeinander zubewegt, welche durch die von der Führungsbohrung 6a und der Führungsstange 6b gebildete Zwangsführung definiert ist. Die Längsachsen der Führungsbohrung 6a und Führungsstange 6b sind um einen Neigungswinkel zur Vertikalen, das heißt zur Werkzeugrichtung geneigt. Die Schweißrichtung verläuft damit in diesem Neigungswinkel zur Vertikalen.

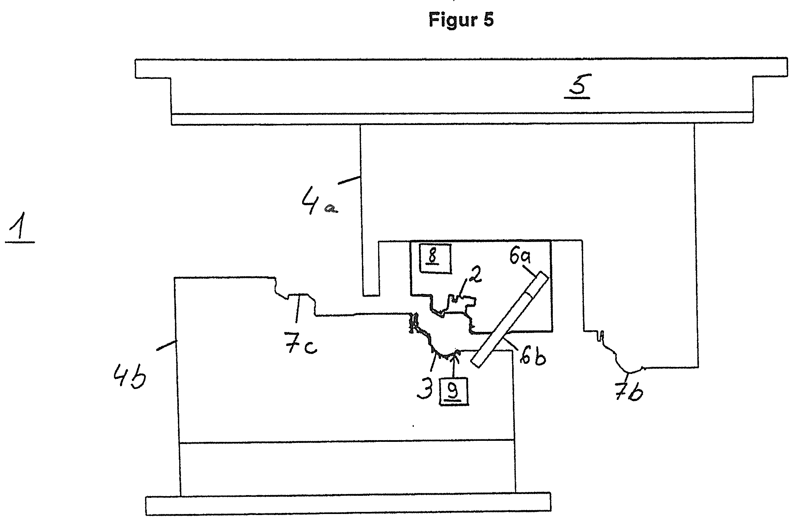

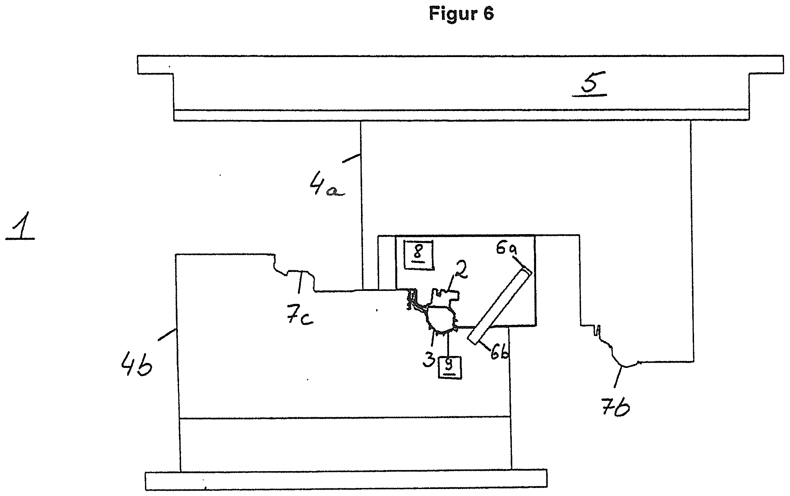

Dies ist in den Figuren 5 und 6 verdeutlicht, die die Bewegung der Werkzeugteilen 4a, 4b entlang der Schweißrichtung zeigen. In der in Figur 4 dargestellten Startposition ist die Führungsstange 6b zur Führungsbohrung 6a so angeordnet, dass die Spitze der Führungsbohrung 6a gerade an der Einmündung der Führungsbohrung 6a liegt. Durch Verfahren der Werkzeugteile 4a, 4b aus dieser Startposition heraus, wird die Führungsstange 6b immer weiter in die Führungsbohrung 6a eingeführt, wodurch die Werkzeugteile 4a, 4b in der Schweißrichtung, die entlang der gemeinsamen Längsachse von Führungsbohrung 6a und Führungsstange 6b verläuft, geführt werden (Figur 5, 6).

Durch die Neigung der Schweißrichtung bezüglich der Werkzeugrichtung wird erreicht, dass zur Durchführung des Schweißvorgangs erst kurz, vorzugweise 1 mm bis 2 mm vor Aufeinanderfahren der Werkzeugteile 4a, 4b, die Kunststoffteile 2, 3 in diesen Werkzeugteilen 4a, 4b miteinander kontaktiert werden, und zwar selektiv an den Schweißstellen, das heißt den durch das Heizelement erwärmten Bereichen. Dadurch wird eine ideale Schweißnaht erhalten, die die Kunststoffteile 2, 3 zu einem Bauteil verbindet.

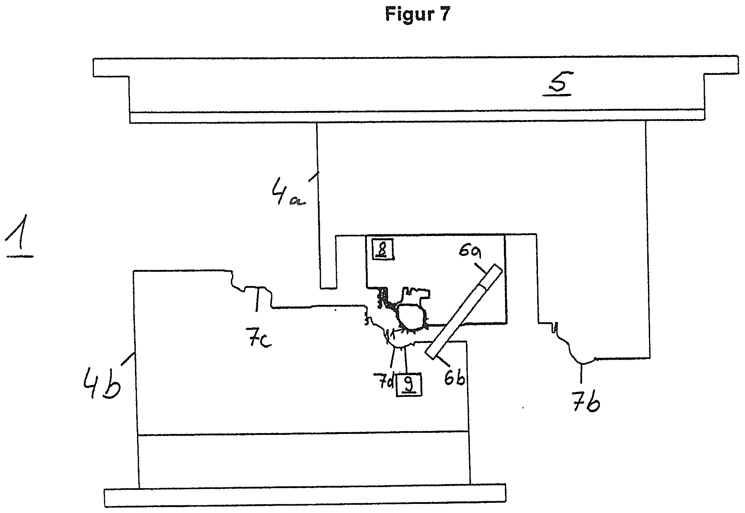

Nachdem durch den Schweißvorgang die Kunststoffteile 2, 3 fest zu dem Bauteil 11 verbunden worden sind, wird, wie in Figur 7 dargestellt, das Werkzeug durch Auseinanderfahren geöffnet. Durch Betätigen der Auswurfeinheit 9 wird dabei das Bauteil 11 von dem unterem Werkzeugteil 4b abgelöst, so dass bei geöffnetem Werkzeug das Bauteil 11 in der Kavität 7a des oberen Werkzeugteils 4a angeordnet und fixiert ist.

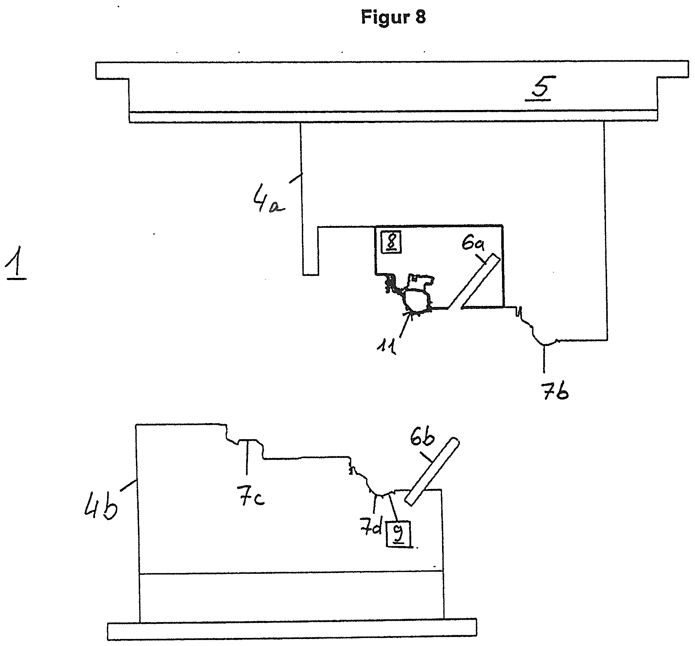

Anschließend wird das Werkzeug, wie in Figur 8 dargestellt, noch weiter geöffnet. Dadurch wird das Bauteil 11 in eine Entnahmeposition eingebracht.

In dieser Entnahmeposition erfolgt, wie in Figur 9 dargestellt, das Entformen des Bauteils 11. Hierzu wird die Auswurfeinheit 8 betätigt, wodurch das Bauteil 11 aus der Kavität 7a des oberen Werkzeugteils 4a abgelöst wird.

Nach der Entformung des Bauteils 11 wird das Werkzeug in seine Spritzposition verfahren, welche in Figur 10 dargestellt ist. Hierzu wird das obere Werkzeugteil 4a entlang der Spritzgußform 1 verfahren, so dass dieses dem unteren Werkzeugteil 4b in Abstand gegenüberliegend angeordnet ist.

Aus der in Figur 9 dargestellten Spritzposition heraus, wird das Werkzeug wieder geschlossen, in dem die Werkzeugteile 4a, 4b in vertikaler Richtung, das heißt in der Werkzeugrichtung verfahren werden, so dass wieder die in Figur 1 dargestellte Position des Werkzeugs eingenommen wird, in welcher von neuem durch einen Spritzguß-Vorgang neue Kunststoffteile 2, 3 hergestellt werden, die nachfolgend entsprechend den Figuren 2 bis 10 dargestellten Prozessfolge durch Heißgas-Schweißen miteinander verbunden werden.

### Bezugszeichenliste

- (1): Spritzgußform
- (2): Kunststoffteil
- (3): Kunststoffteil
- (4a): oberer Werkzeugteil
- (4b): unterer Werkzeugteil
- (5): Führungsschiene
- (6a): Führungsbohrung
- (6b): Führungsstange
- (7a-7d): Kavitäten
- (8): Auswurfeinheit
- (9): Auswurfeinheit
- (10): Heizelement
- (10a): Auslass
- (11): Bauteil

## Patentansprüche

1. Verfahren zur Herstellung eines aus wenigstens zwei Kunststoffteilen (2, 3) bestehenden Bauteils (11), wobei die Kunststoffteile mittels eines Spritzgussverfahrens in einer Spritzgussform (1) hergestellt werden, welche ein Werkzeug mit wenigstens zwei gegeneinander positionierbaren Werkzeugteilen (4a, 4b) aufweist, wobei zur Herstellung der Kunststoffteile mittels des Spritzgussverfahrens das Werkzeug durch Zusammenfahren der Werkzeugteile in einer Werkzeugrichtung geschlossen und Kunststoff in wenigstens zwei von den Werkzeugteilen begrenzte, beabstandet liegende Hohlräumen eingespritzt wird, worauf das Werkzeug geöffnet wird und die Werkzeugteile (4a, 4b), an denen jeweils eines der Kunststoffteile (2, 3) gelagert ist, so positioniert werden, dass die Werkzeug- und Kunststoffteile in einer Schweißposition angeordnet sind, sowie die Kunststoffteile in der Spritzgussform (1) anschließend durch Schweißen dadurch miteinander verbunden werden, dass in der Schweißposition ein Heizelement (10) in den Zwischenraum zwischen die Kunststoffteile eingebracht wird, wobei mit dem Heizelement miteinander zu verschweißende Bereiche, nämlich Randbereiche der Kunststoffteile berührungslos erwärmt werden, worauf das Heizelement aus dem Zwischenraum entfernt wird und dann die Werkzeugteile (4a, 4b) aus der Schweißposition in einer zur Werkzeugrichtung geneigten Schweißrichtung so aufeinander zu bewegt werden, dass die miteinander zu verschweißenden Bereiche der Kunststoffteile miteinander in Kontakt gebracht und an ihren erwärmten Bereichen miteinander zu dem Bauteil (11) verschweißt werden, **dadurch gekennzeichnet, dass** als Heizelement ein Heißgas-Heizelement (10) verwendet wird.

2. Verfahren nach Anspruch 1, **dadurch gekennzeichnet, dass** das Heizelement (10) eine Anordnung von Löchern (10a) aufweist, über welche die Randbereiche der Kunststoffteile (2, 3) mit Heißgas beaufschlagt werden.

3. Verfahren nach Anspruch 1 oder 2, **dadurch gekennzeichnet, dass** die Werkzeugteile (4a, 4b) mittels einer Zwangsführung (6a, 6b) entlang der Schweißrichtung geführt werden.

4. Verfahren nach Anspruch 3, **dadurch gekennzeichnet, dass** als Zwangsführung als erstes Element eine Führungsbohrung (6a) in einem ersten Werkzeugteil (4a) sowie als zweites Element eine in der Führungsbohrung geführte Führungsstange (6b) am zweiten Werkzeugteil (4b) verwendet werden.

5. Verfahren nach einem der Ansprüche 1 bis 4, **dadurch gekennzeichnet, dass** der Neigungswinkel zwischen der Werkzeugrichtung und der Schweißrichtung so gewählt ist, dass die Kunststoffteile (2, 3) erst unmittelbar vor deren Zusammenführen nur mit ihren miteinander zu verschweißenden Randbereichen in Kontakt kommen.

6. Verfahren nach einem der Ansprüche 1 bis 5, **dadurch gekennzeichnet, dass** nach dem Verschweißen das Werkzeug geöffnet wird und das Bauteil (11) mittels Auswurfeinheiten (8, 9) aus der Spritzgussform (1) entfernt wird.

7. Verfahren nach Anspruch 6, **dadurch gekennzeichnet, dass** nach dem Entfernen des Bauteils (11) aus der Spritzgussform (1) in dieser erneut Kunststoffteile (2, 3) hergestellt werden, die anschließend in der Spritzgussform durch Heißgas-Schweißen miteinander verbunden werden.

8. Vorrichtung zur Herstellung eines aus wenigstens zwei Kunststoffteilen (2, 3) bestehenden Bauteils (11) umfassend eine Spritzgussform (1) und dieser zugeordnete Mittel zum Einspritzen von Kunststoff zur Herstellung der Kunststoffteile (2, 3) mittels Spritzgießens in der Spritzgussform, wobei die Spritzgussform ein Werkzeug mit wenigstens zwei mittels eines Positioniermittels gegeneinander positionierbaren Werkzeugteilen (4a, 4b) aufweist, die zur Herstellung der Kunststoffteile bei geschlossenem Werkzeug in einer Werkzeugrichtung zusammenfahrbar sind, so dass Kunststoff in wenigstens zwei von den Werkzeugteilen begrenzte, beabstandet liegende Hohlräume einspritzbar ist, wobei bei geöffnetem Werkzeug an den Werkzeugteilen (4a, 4b) jeweils eines der Kunststoffteile (2, 3) lagerbar ist und die Werkzeugteile so positionierbar sind, dass die Werkzeug- und Kunststoffteile in einer Schweißposition angeordnet sind, in welcher ein Heizelement (10) in einen Zwischenraum zwischen die Kunststoffteile so einbringbar ist, dass mit dem Heizelement miteinander zu verschweißende Bereiche, nämlich Randbereiche der Kunststoffteile berührungslos erwärmbar sind, und wobei das Heizelement aus dem Zwischenraum entfernbar ist und sodann die Werkzeugteile aus der Schweißposition in einer zur Werkzeugrichtung geneigten Schweißrichtung so aufeinanderzu bewegbar sind, dass die miteinander zu verschweißenden Kunststoffteil-Randbereiche miteinander in Kontakt bringbar und an ihren erwärmten Randbereichen miteinander zu dem Bauteil (11) verschweißbar sind, **dadurch gekennzeichnet, dass** das Heizelement ein Heißgas-Heizelement (10) ist.

9. Vorrichtung nach Anspruch 8, **dadurch gekennzeichnet, dass** der Neigungswinkel zwischen der Werkzeugrichtung und der Schweißrichtung so gewählt ist, dass die miteinander zu verschweißenden Kunststoffteil-Randbereiche erst unmittelbar vor einem Aufeinanderfahren der Werkzeugteile (4a, 4b) miteinander in Kontakt bringbar sind.

## Claims

1. A method for producing a component (11) consisting of at least two plastics parts (2, 3), wherein the plastics parts are produced by means of an injection moulding process in an injection mould (1) which comprises a tool with at least two oppositely-positionable tool parts (4a,4b) being positionable relative to each other, wherein to produce the plastics parts by means of the injection moulding process the tool is closed by bringing the tool parts together in a tool direction and plastics material is injected into at least two spaced-apart cavities delimited by the tool parts, after which the tool is opened and the tool parts (4a,4b), on each of which one of the plastics parts (2,3) is supported, are so positioned that the tool parts and the plastics parts are arranged in a welding position, and the plastics parts in the injection mould (1) are then connected to each other by welding in that in the welding position a heating element (10) is introduced into the intermediate space between the plastics parts, wherein regions which are to be welded to each other, namely edge regions of the plastics parts are heated by the heating element in a contactless manner, after which the heating element is removed from the intermediate space and then the tool parts (4a,4b) are moved towards each other from the welding position in a welding direction inclined to the tool direction such that the regions of the plastics parts which are to be welded to each other are brought into contact with each other and are welded to each other at their heated regions to form the component (11), **characterised in that** a hot gas heating element (10) is used as the heating element.

2. A method according to claim 1, **characterised in that** the heating element (10) has an arrangement of holes (10a) by means of which the edge regions of the plastics parts are exposed to hot gas.

3. A method according to claim 1 or 2, **characterised in that** the tool parts (4a,4b) are guided along the welding direction by means of a forced guide (6a,6b).

4. A method according to claim 3, **characterised in that** as the forced guide there are used as a first element a guide bore (6a) in a first tool part (4a) and as a second element a guide rod (6b) on the second tool part (4b) and guided in the guide bore.

5. A method according to any one of claims 1 to 4, **characterised in that** the angle of inclination between the tool direction and the welding direction is selected so that the plastics parts (2,3) only come into contact immediately before their bringing together and only by means of their edge regions to be welded together.

6. A method according to any one of the claims 1 to 5, **characterised in that** after the welding operation the tool is opened and the component (11) is removed by means of ejection units (8,9) from the injection mould (1).

7. A method according to claim 6, **characterised in that** after the removal of the component (11) from the injection mould (1), plastics parts (2,3) are produced anew therein, which are then connected together in the injection mould by hot gas welding.

8. A device for the production of a component (11) consisting of at least two plastics parts (2,3) comprising an injection mould (1) and means associated therewith for the injection of plastics material for the production of the plastics parts (2,3) by means of injection moulding in the injection mould, wherein the injection mould comprises a tool with at least two tool parts (4a,4b) which are positionable relative to each other by means of a positioning means, the tool parts being configured to be brought together in a tool direction for the production of the plastics parts with the tool closed, so that plastics material is injectable into at least two spaced-apart cavities delimited by the tool parts, wherein with the tool opened there is mountable on each of the tool parts (4a,4b) a respective one of the plastics parts (2,3) and the tool parts are so positionable that the tool parts and the plastics parts are arranged in a welding position, in which a heating element (10) is introducible into an intermediate space between the plastics parts, so that regions which are to be welded to each other by the heating element, namely edge regions of the plastics parts, are heatable in a contactless manner, and wherein the heating element is removable from the intermediate space and then the tool parts are moveable towards each other from the weld position in a weld direction inclined to the tool direction such that the edge regions of the plastics parts which are to be welded to each other are bringable into contact and are weldable to each other at their heated edge regions to form the component (11), **characterised in that** the heating element is a hot gas heating element (10).

9. Device according to claim 8, **characterised in that** the angle of inclination between the tool direction and the weld direction is selected so that the edge regions of the plastics parts to be welded to each other are bringable into contact with each other only directly before the bringing together of the tool parts (4a,4b).

## Revendications

1. Procédé de fabrication d'une pièce (11) constituée d'au moins deux parties en matière plastique (2, 3), les parties en matière plastique étant fabriquées au moyen d'un procédé de moulage par injection dans un moule de moulage par injection (1), lequel présente un outil pourvu d'au moins deux parties d'outil (4a, 4b) pouvant être positionnées l'une vis-à-vis de l'autre, l'outil, pour la fabrication des parties en matière plastique au moyen du procédé de moulage par injection, étant fermé dans une direction d'outil par rapprochement des parties d'outil et la matière plastique étant injectée dans au moins deux cavités délimitées par les parties d'outil et espacées l'une de l'autre, après quoi l'outil est ouvert et les parties d'outil (4a, 4b), sur lesquelles est montée chacune des parties en matière plastique (2, 3), sont positionnées de telle manière que les parties d'outil et en matière plastique sont agencées dans une position de soudage, et les parties en matière plastique dans le moule de moulage par injection (1) sont ensuite reliées l'une à l'autre par soudage, du fait que, dans la position de soudage, un élément chauffant (10) est introduit dans l'espace intermédiaire entre les parties en matière plastique, des zones à souder les unes aux autres au moyen de l'élément chauffant, à savoir des zones marginales des parties en matière plastique, étant chauffées sans contact, après quoi l'élément chauffant est retiré de l'espace intermédiaire puis les parties d'outil (4a, 4b) sont déplacées l'une vers l'autre à partir de la position de soudage dans une direction de soudage inclinée par rapport à la direction de l'outil, de façon à mettre en contact les zones à souder les unes aux autres des parties en matière plastique et à les souder les unes aux autres au niveau de leurs zones chauffées de manière à obtenir la pièce (11), **caractérisé en ce qu'**un élément chauffant au gaz chaud (10) est utilisé comme élément chauffant.

2. Procédé selon la revendication 1, **caractérisé en ce que** l'élément chauffant (10) présente un ensemble de trous (10a) par l'intermédiaire desquels les zones marginales des parties en matière plastique (2, 3) peuvent être soumises à l'effet du gaz chaud.

3. Procédé selon la revendication 1 ou 2, **caractérisé en ce que** les parties d'outil (4a, 4b) sont guidées le long de la direction de soudage au moyen d'un guidage forcé (6a, 6b).

4. Procédé selon la revendication 3, **caractérisé en ce que**, en tant que guidage forcé, un trou de guidage (6a) dans une première partie d'outil (4a) est utilisé comme premier élément et une tige de guidage (6b) guidée dans le trou de guidage sur la deuxième partie d'outil (4b) est utilisée comme deuxième élément.

5. Procédé selon l'une quelconque des revendications 1 à 4, **caractérisé en ce que** l'angle d'inclinaison entre la direction de l'outil et la direction du soudage est sélectionné de telle manière que les parties en matière plastique (2, 3) ne viennent en contact par leurs zones marginales à souder les unes aux autres que juste avant d'être réunies.

6. Procédé selon l'une quelconque des revendications 1 à 5, **caractérisé en ce que**, après le soudage, l'outil est ouvert et la pièce (11) est démoulée du moule de moulage par injection (1) au moyen d'unités d'éjection (8, 9).

7. Procédé selon la revendication 6, **caractérisé en ce que**, une fois la pièce (11) démoulée du moule de moulage par injection (1), parties en matière plastique (2, 3) sont à nouveau fabriquées dans ce dernier, puis reliées l'une à l'autre dans le moule de moulage par injection par soudage au gaz chaud.

8. Dispositif de fabrication d'une pièce (11) constituée d'au moins deux parties en matière plastique (2, 3), comprenant un moule de moulage par injection (1) et des moyens associés à ce dernier pour injecter la matière plastique pour la fabrication des parties en matière plastique (2, 3) par moulage par injection dans le moule de moulage par injection, le moule de moulage par injection présentant un outil pourvu d'au moins deux parties d'outil (4a, 4b) pouvant être positionnées l'une vis-à-vis de l'autre à l'aide d'un moyen de positionnement, lesquelles, pour la fabrication des parties en matière plastique, lorsque l'outil est fermé, peuvent être rapprochées dans une direction d'outil, de sorte que la matière plastique peut être injectée dans au moins deux cavités délimitées par les parties d'outil et espacées l'une de l'autre, sachant que, lorsque l'outil est ouvert, chacune des parties en matière plastique (2, 3) peut être montée sur les parties d'outil (4a, 4b), et les parties d'outil peuvent être positionnées de telle manière que les parties d'outil et en matière plastique sont agencées dans une position de soudage dans laquelle un élément chauffant (10) est introduit dans un espace intermédiaire entre les parties en matière plastique, de telle manière que les zones à souder les unes aux autres au moyen de l'élément chauffant, à savoir les zones marginales des parties en matière plastique, peuvent être chauffées sans contact, et l'élément chauffant pouvant être retiré de l'espace intermédiaire puis les parties d'outil pouvant être déplacées l'une vers l'autre à partir de la position de soudage dans une direction de soudage inclinée par rapport à la direction de l'outil, de façon à mettre en contact les zones marginales à souder les unes aux autres des parties en matière plastique et à les souder les unes aux autres au niveau de leurs zones marginales chauffées de manière à obtenir la pièce (11), **caractérisé en ce que** l'élément chauffant est un élément chauffant au gaz chaud (10).

9. Dispositif selon la revendication 8, **caractérisé en ce que** l'angle d'inclinaison entre la direction de l'outil et la direction du soudage est sélectionné de telle manière que les zones marginales à souder les unes aux autres des parties en matière plastique ne peuvent être mises en contact les unes avec les autres que juste avant un rapprochement des parties d'outil (4a, 4b).
